Europäisches Patentamt

European Patent Office

Office européen des brevets

(11) Publication number: **0 481 446 A2**

## EUROPEAN PATENT APPLICATION

(21) Application number: **91117642.8**

(22) Date of filing: **16.10.91**

(51) Int. Cl.5: **G11B 27/02**, G03B 31/00, G11B 27/10

(30) Priority: **16.10.90 JP 277185/90**

(43) Date of publication of application:
**22.04.92 Bulletin 92/17**

(84) Designated Contracting States:
**DE FR GB IT**

(71) Applicant: **SOMAR CORPORATION**
**11-2, Ginza 4-chome Chuo-ku**
**Tokyo 104(JP)**

(72) Inventor: **Shioiri, Shigeo**
**1-12-21, Fusa**
**Abiko-shi, Chiba(JP)**

Inventor: **Kanda, Kunio**
**838, Kamihanawa, Noda-shi**
**Chiba(JP)**
Inventor: **Chikura, Yutaka**
**4-13-21, Minamimagome**
**Ota-ku, Tokyo(JP)**
Inventor: **Kanbara, Hiromi**
**4-13-21, Minamimagome**
**Ota-ku, Tokyo(JP)**

(74) Representative: **Boeters, Hans Dietrich, Dr. et al**
**Boeters & Bauer Bereiteranger 15**
**W-8000 München 90(DE)**

(54) Video projecting method, image editing method, and sound recording system using film editing machine.

(57) A film editing machine includes an intensity adjustment for the light irradiating the film and a color filter for the light passing through the film. When the film editing system includes an audio editing portion, the system further includes a synchronizing mechanism for synchronizing video and audio portions of the system.

FIG. 1

## BACKGROUND OF THE INVENTION

This invention relates to a video projection method, an image editing method, and a sound recording system, using a metal film editing machine.

In general, a projection film such as a broadcasting film or a motion picture film is formed by editing a number of original films. In order to perform a film editing operation (the term "film editing" or merely "editing" as used herein is intended to mean not only an ordinary film editing operation but also an operation of checking an edited film by projecting it onto a screen), a film editing machine including a film projector is utilized. The film editing machine has a variable projection function. Heretofore, in editing films with a film editing machine, first a film to be edited is loaded in the film editing machine, and then the film projector is operated to project the film thus loaded onto the screen of the film editing machine body, and under this condition, the operator edits the film while watching the image formed on the screen.

In the case of recording sounds in a motion picture film, e.g., in the case of an animation TV motion picture, a projectionist operates the film projector to project the film on the screen, while radio actors and/or actresses speak their parts while watching the images formed on the screen.

In this connection, the above-described prior art suffers from the following difficulties:

(1) In the case where pictures are projected onto the screen with the film projector, the picture thus projected can be seen only in real time. Therefore, it takes time and labor to locate a part of the film which is to be processed, and accordingly it is impossible to change and quickly project the pictures from different parts of the film.

(2) In order to check the pictures in some frames of a film, it is sometimes necessary to remove the film from the film projector, and to use a viewer or the like which is additionally provided.

(3) It is necessary to use a tele-cine device to convert the pictures in the frames of a projection film into video images. However, tele-cine devices are considerably expensive.

(4) It is necessary to employ a projectionist, which further increases the cost of editing.

(5) The film projector will generate noise when operated. Therefore, it is necessary to set the film projector in a room which is different from the room where the radio actors and actresses speak their parts. Furthermore, since the film projector employs a light source such as a xenon lamp producing a large amount of heat, the room must usually be air-conditioned.

Accordingly, an object of this invention is to provide a video projection method, an image editing method, and a film editing and sound recording system in which the above-described difficulties accompanying a conventional film editing method have been eliminated, and in which the existing film editor can be used more effectively.

## SUMMARY OF THE INVENTION

In order to attain the above-described object, this invention provides a film editing system which is provided with means for adjusting the quantity of light of a light source used to irradiate the film, and a color changing filter for changing the color of a light beam passed through the film. A video camera is coupled through an adapter to the film editing machine, and the pictures in the frames of the film are shot with the video camera, and projected onto a screen by a video project or displayed on a video monitor.

In the method practiced by this system, the brightness and color of the pictures in the projections film are adjusted by the means of adjusting the intensity of the light source and by the color changing filter. Therefore, the pictures shot with the video camera and projected on the screen by the video projector are substantially equal in brightness and in color to those which are projected with a film projector. In addition, by utilizing the original functions of the film editing machine, the operator can readily perform not only a frame stop operation and an image slow-forwarding operation, but also a film fast-forwarding or rewinding operation while watching&, the images projected onto the screen. This feature allows the operator to locate the part of the film which is to be handled. The use of the video projector provides the following merit: That is, since a number of person can watch the images reproduced thereby, for instance in the manufacture of an animation TV motion picture a sound recording operation can be achieved with ease.

The invention further provides an image editing method in which the output of the video camera described above is connected to the video projector and/or video monitor, and to a video tape recorder, and an operator performs an editing operation while watching images formed onto the screen by the video projector or images displayed on the video monitor, so that images edited through the editing operation are recorded, as video images, with the video tape recorder.

In this second method, the pictures in the projection film which have been converted into video signals by the video camera are edited, and recorded as video images. Therefore, desired information of the projection film carl be stored in the form of a video tape. The video tapes thus formed may be utilized, for instance, for tape libraries.

The invention further provides a film editing and sound recording system which comprises: a film editing machine including means for adjusting a quantity of light applied to a projection film such as a broadcasting film or a motion picture film, and a color changing filter for changing the color of a light beam passed through the film; a video camera coupled through an adapter to the film editing machine, for converting the pictures in the frames of the film into video signals; a video projector for converting the video signals outputted by the video camera into video images and projecting the a video images on a screen, or a video monitor for converting the video signals outputted by the video camera into video images and displaying the video signal thereon; an audio tape recorder coupled to the film editing machine, for recording sounds corresponding to the pictures in the frames of the film; a mechanism for synchronizing the film editing machine and the audio tape recorder with each other; and remote control means for remotely operate the film editing machine and the audio tape recorder.

In the above-described system, according to the invention, the film editing machine has a function of outputting bi-phase pulses having a predetermined frequency which indicates a forward operation or reverse operation thereof, and the mechanism for synchronizing the film editing machine and the audio tape recorder comprises: (a) an interface box to which (1) applies a line lock pulse to first and second synchronizers, (2) determines in response to the bi-phase pulses whether the film editing machine is operating in the forward or reverse direction, and (3) counts the bi-phase pulses and applies a start pulse to the first synchronizer when the number of counted bi-phase pulses reaches a predetermined value; (b) the first synchronizer which starts formation of a time code in response to the start pulse, and supplies the time code thus formed to the second synchronizer; (c) the second synchronizer which receives the time code from the first synchronizer and a time code which has been recorded in a sound recording tape in the audio tape recorder, and controls the rotation of the audio tape recorder in accordance with the difference between the former and latter time codes; and (d) a synchronizer controller which has a numerical keyboard for setting operation start positions for the film editing machine and the audio tape recorder, and applies data on the operation start positions to the first synchronizer.

Further in the system according to the invention, the first synchronizer has a function of counting the bi-phase pulses provided by the film editing machine and recording a time position in correspondence to the number of counted bi-phase pulses, and a function of applying an operation signal to the film editing machine when the time position set by the synchronizer controller is different from the time position stored therein, and applying a stop signal to the film editing machine when the former time position is equal to the latter time position.

According to a further aspect of the invention, the film editing machine and the audio tape recorder are operated in synchronization with each other by means of the synchronizing mechanism, and the use of the video camera and the video projector permits sounds to be recorded in correspondence to the pictures in the projection film; more specifically, while watching the video images, the radio actors and/or actress can speak their parts in correspondence to the images displayed.

Furthermore, all of the operations are controlled by the remote controller, so that the system can be operated by a relatively small number of persons, the sound recording operation can be achieved with ease, and it is unnecessary to provide a wide area for projection of a motion picture film or the like.

BRIEF DESCRIPTION OF THE DRAWINGS

The invention will be more clearly understood from the following description in conjunction with the accompanying drawings, in which:

Fig. 1 is a block diagram of a film editing and sound-recording system according to a preferred embodiment of the invention; and

Fig. 2 is an explanatory diagram of the arrangement of a film editing machine and a video camera adapter shown in Fig. 1.

DETAILED DESCRIPTION OF THE PREFERRED EMBODIMENT

First, the video projection system in the film editing and sound-recording system will be described. The video projection system fundamentally comprises a film editing machine 1, a video camera adapter 2, a video camera 3, an image distributor 4, a scan converter 5, a source selector 6, a video projector 7, a screen 8, and a video monitor 9.

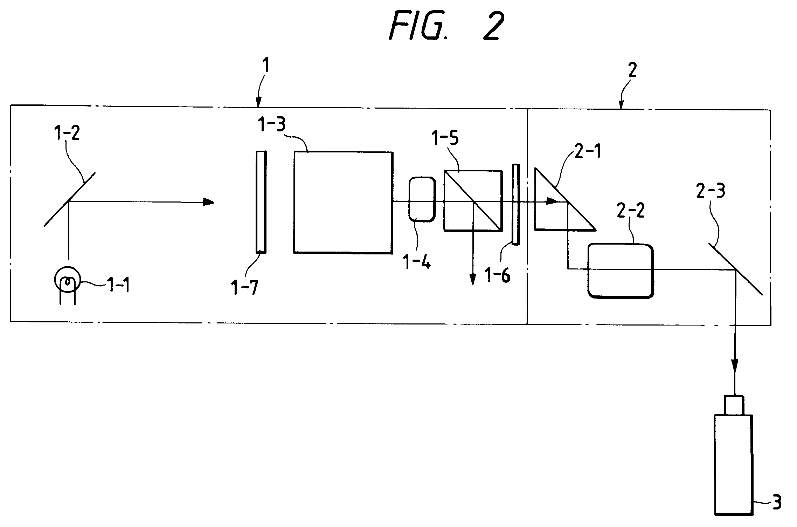

The film editing machine 1, as shown in Fig. 2, comprises a light source 1-1 including a xenon lamp or the like, a prism condenser 1-2, a sixteen-surface prism 1-3, a master lens 1-4, a beam splitter 1-4, a color changing filter 1-6, and a light beam source intensity adjusting means (not shown). In Fig. 2, reference numeral 1-7 designates a projecting film to be edited.

As also shown in Fig. 2, the video camera adapter comprises a prism 2-1, a lens 2-2, a mirror 2-3, and a cover (not shown) for covering these components 2-1 through 203. The pictures in the frames of the projecting film 1-7 may be projected onto a screen with a projector (not shown), or they may be converted into video signals by the video camera 3 and with the aid of these video signals the pictures may be projected onto the screen 8 by the video projector 7. In these two cases, however, the quantity of light from the light source which is required to achieve a suitable brightness for the picture projected on the screen is different. In order to overcome this difficulty, the light-source intensity adjusting means provided for the film editing machine is used to control the intensity of light so that it is suitable in both cases.

The color changing filter 1-6 is provided to overcome the difficulty that, when the pictures in the frames of the film 1-7 are shot with the video camera 3 directly, the resultant images are different in color from the pictures from which they originate.

The film editing machine 1 may be remote-controlled by a film editing machine remote controller 10. It goes without saying that the operation of the film editing machine can be controlled in a conventional manner.

In the video projection system thus organized, the output light beam of the light source 1-1, the intensity of which has been adjusted to a value suitable for a video image, is applied through the prism condenser 1-2 to the film 1-7. The light beam passed through the film 1-7 advances through the sixteen-surface prism 1-3 and the master lens 1-4 to the beam splitter 1-5, where it is split into two parts, one part passing downwardly and the other passing to the right to the video camera adapter.

The light beam advancing along the downward optical path is used for the projection on a screen which is carried out with an ordinary film projector (not shown), while the remaining light beam advancing to the right in Fig. 2 is used for the projection onto the screen 8 which is carried out with the video projector 7 as described later. The light beam advancing along the latter optical path is applied to the color adjusting filter 1-6, where it is adjusted in color so as to be most suitable for a video image. The light beam thus processed is applied through the prism 2-1, the lens 2-2 and the mirror 2-3 to the video camera 3.

The pictures shot with the video camera 3 are converted into video signals, which are distributed by the image distributor 4 to both the video projector 7 and the video monitor 9, where the images of the pictures can be observed. The video signals applied to the video projector 7 are first passed through the scan converter 5 and the source selector 6, i.e., the video signals are applied to the video projector 7 after being subjected to color correction, so that video images are formed on the screen 8.

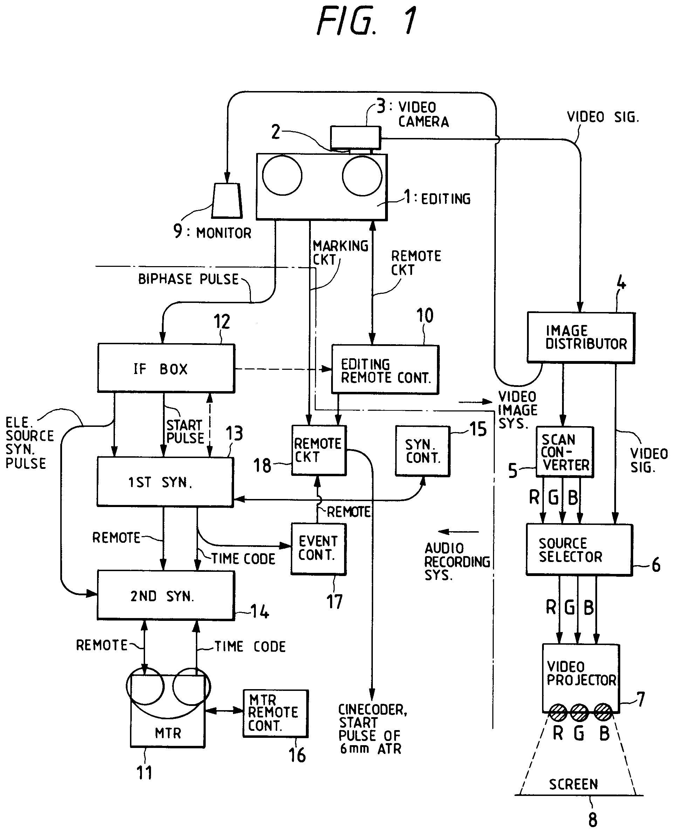

The sound recording system will now be described. In Fig. 1, reference numeral 11 designates a multi-audio tape recorder (hereinafter referred to as "an MTR 11", when applicable). In the preferred embodiment, in order to operate the MTR 11 and the film editing machine 1 in synchronization, a synchronizing mechanism is provided, and the film editing machine 1 has a function of applying a bi-phase pulse signal to the synchronizing mechanism. The bi-phase pulses have one phase for the forward operation of the film editing machine 1 and the other phase for the reverse operation, and may be referred to as a forward/reverse signal. The bi-phase pulses also have a predetermined frequency which is provided by a synchronizing signal generator included in the film editing machine 1.

The synchronizing mechanism is made up of an interface box 12, a first synchronizer 13, a second synchronizer 14, and a synchronizer controller 15. The interface box 12 receives the bi-phase pulses from the film editing machine 1 to detect whether the film editing machine is operating in the forward direction or the reverse direction, and counts the pulses thus received. Upon counting up to a predetermined value, the interface box applies a start pulse to the first synchronizer 13. In addition, the interface box applies a line lock pulse to the first and second synchronizers 13 and 14.

In response to the start pulse from the interface box 12, the first synchronizer 13 starts formation of a time code. The time code thus formed is applied to the second synchronizer 14. The second synchronizer 14, while receiving the time code from the first synchronizer 14, receives data on a time code recorded in one of the sound recording tape channels (e.g., one of sixteen channels) of the MTR 11, and compares them with each other to obtain the difference therebetween to thereby control the rotation drive system of the MTR 11.

The synchronizer controller 15 operates to determine the operation start positions of the film editing machine 1 and the MTR 11 by remote control, and has a numeric keyboard. When the operation start positions are determined by operating the keyboard, the data on these operation start positions are applied to the first synchronizer 13, so as to determine a time position (relative address) for the time code formed by the first synchronizer 13.

Further in Fig. 1, reference numeral 16 designates a MTR remote controller for remote-control of the MTR 11, 17 designates an event controller, and 18 designates a remote circuit. The event controller 17 and the remote circuit 18 are used in the case where sound recording/reproducing operations are carried out by using equipment such as a cine-coder during formation of a motion picture film. The event controller and the remote circuit are controlled by the film editing machine remote controller 10. In the above-described embodiment, a multi-audio tape recorder is employed as sound recording means, but it will be appreciated that an ordinary audio tape recorder or digital audio tape recorder can be employed.

The operation of the system according to the invention will now be described with reference to a sound recording operation for a motion picture film.

First, a motion picture film in which sound should be recorded is loaded in the film editing machine 1, and a sound recording tape is loaded in the MTR 11. Thereafter, the system is activated via the remote controller 10 by setting the film editing machine to the forward operation. As a result, the pictures in the frames of the film are shot by the video camera 3 and are also projected onto the screen 8 by the video projector. The resultant images are compared in brightness with the pictures in the frames of the film, and a control knob in the light source intensity adjusting means is operated until the brightness of the former is the same as the brightness of the latter. In addition, the resultant images formed on the screen 8 are compared in color with the pictures in the frames of the film, and the color changing filter 1-6 is operated until the former and the latter become equal in color to each other.

Next, a master time code is recorded in the sound recording tape loaded in the MTR 11 as follows. The operator operates a switch on the film editing machine remote controller 10, to detect the top of the series of frames of the motion picture film while watching the screen 8 or the video monitor 9. The pictures in the frames of the film are projected, as video images, on the screen 8 in the above-described manner. In this case, the counter in the film editing machine remote controller 10 is set to "1 hour 00 minute 00 second 00 frame". Under this condition, the switch of the film editing machine remote controller 10 is turned in the reverse direction, so that the film is rewound until the counter in the remote controller 10 shows "59 minute 50 second 00 frame".

On the other hand the MTR remote controller 16 is operated so that the counter of the MTR remote controller 16 is set to "1 hour 00 minute 00 second 00 frame" upon reaching a desired part of the sound recording tape in the MTR 11 where a sound of the sound recording operation should be started. The MTR remote controller is operated again so chat the sound recording tape controller 16 is operated again and is rewound until the counter shows "59 minute 30 second 00 frame". In this case, the counter of the film editing machine remote controller 10 shows "59 minute 50 second 00 frame", while the counter of the MTR remote controller 16 shows "59 minute 30 second 00 frame", i.e., there is a difference of 20 seconds therebetween. This is due to the fact that the start of the sound recording tape is delayed to such an extent. Thereafter, the synchronizer controller 15 is operated to activate the time code generator of the first synchronizer 13 so that the time code is recorded in one of the channels of the tape. Thus, the front half of the operation has been accomplished.

Thereafter, the film editing machine is switched to the forward or reverse operation via the remote controller 10. As a result, the film editing machine 1 supplies the bi-phase pulses to the synchronizing mechanism, whereby the motion picture film loaded in the film editing machine and the sound recording tape loaded in the MTR 11 are operated in synchronization with each other.

The synchronization will now be described in more detail. When the film editing machine is switched to the forward or reverse direction via the remote controller 10, the synchronizing mechanism in the film editing machine 1 applies bi-phase pulses, e.g., of 600 Hz, to the interface box 12. The interface box 12 determines from the bi-phase pulses whether the film editing machine 1 is operated in the forward direction or in the reverse direction. The interface box supplies the data on this determination to the first synchronizer 13, and counts the pulses. When the pulses thus counted reach a value corresponding to one (1) second, the interface box 12 applies a start pulse to the first synchronizer 13.

The start pulse is used for the following purpose. Since the film editing machine body starts in about one (1) second, whereas the time code signal in the first synchronizer 13 rises instantly (i.e., in substantially zero second), it is necessary to eliminate the difference between the time of start of the former and the time of rise of the latter. On the other hand, the interface box 12 supplies the line lock pulse to the first and second synchronizers 13 and 14 at all times irrespective of the forward operation or reverse operation of the film editing machine 1. The application of the line lock pulse can effectively prevent the wow and flutter which otherwise are caused by mechanical factors in the film editing machine 1, i.e., it can prevent the non-uniform reproduction of sound.

Upon reception of the start pulse from the interface box 12, the first synchronizer 13 forms a time code, and applies it to the second synchronizer 14. The second synchronizer 14 receives from the MTR 11 the time code which has been recorded in the sound recording tape in advance, and compares the two time codes, so as to control the rotation of the MTR 11 in accordance with the difference between the two time codes to thereby register the MTR and the film editing machine with each other so that they will operate in synchronization with each other. Therefore, by setting an operation start position with the numeric keyboard of the synchronizer controller 15, the desired (synchronized) positions of the motion picture film and the sound recording tape can be easily controlled.

In a sound recording operation with radio actors or actresses, the sound recording system and the film editing machine remote controller 10 are positioned in the mixing room, and the video projector 7 and the screen 8 are set on the sound recording stage. The film editing machine 1 may be positioned in the mixing room, or in another room. In this case, it is unnecessary to man the film editing machine 1. The mixer or assistant remotely controls the film editing machine 1 and the MTR 11 with the film editing machine remote controller 10, the synchronizer controller 15, and the MTR remote controller 16, while the radio actors or actresses on the sound recording stage speak their parts while watching the images which are formed on the screen 8 by the video projector 7. In this case, the system functioning in the above-described manner provides the following advantages:

(1) There are no noises produced during the operation of the projector, so that it is unnecessary to provide a projection room.

(2) The light beam passed through the film is not directly employed for projection onto a screen, thereby resulting in an increase in the degree of freedom in selection of a location for installation of the system and in determination of the layout of equipment in the mixing room and the arrangement of the operators.

(3) The system employs no element such as a xenon lamp in a projector which generates a large amount of heat, thus decreasing the need for air conditioning.

(4) It is possible to use a single room as both the motion picture mixing room and the video sound recording room.

(5) All of the operations can be controlled remotely from the mixing room, and therefore it is unnecessary to assign an operator to operate the projector.

(6) A motion picture film is used as is for video projection, thereby eliminating the time and labor which have been required in the past for recording the motion picture film with a VTR.

(7) In a conventional projection system, the images are observed only in real time. On the other hand, the system of this invention permits the operator to readily achieve not only a frame stop operation and a slow motion forward operation, but also a film fast-forwarding or rewinding operation while watching the images projected onto the screen. This feature allows the operator to more easily locate the part of the film which is to be handled.

(8) In a conventional projection system, in order for the operator to check the pictures of some frames of a motion picture film, the film was removed from the projector and then checked with a viewer or the like. However, in the system of this invention, this check can be achieved with the film remaining in the projector, by viewing the large screen.

(9) With a digital counter, the film's "minute, second and frame" can be read with high accuracy.

(10) Any point on the film can be automatically located at high speed.

While one embodiment of this invention has been described, it should be noted that the invention is not limited thereto or thereby, but various changes and modifications may be made therein without departing from the invention. For instance, the first synchronizer 13 in Fig. 1 may be modified to have a first function wherein the first synchronizer counts the bi-phase pulses provided by the film editing machine 1 and stores a time position (or address) corresponding to the number of bi-phase pulses thus counted, and a second function wherein the first synchronizer receives the data on a time position set with the numeric keyboard of the synchronizer controller, and compares the data thus received with the time position data stored therein. In this second function, when the former data is different from the latter data, the first synchronizer applies an operation signal to the film editing machine 1 with the aid of the film editing machine remote controller 10, whereas when the former data is equal to the latter data, the first synchronizer applies a stop signal to the film editing machine 1.

In this modification, the time position from the reference point set in advance is stored in the first synchronizer by counting the bi-phase pulses at all times. When the operator sets a desired time position by operating the numeric keyboard of the synchronizer controller 15, the data on the time position is applied to the first synchronizer 13, so that the latter produces the operation signal for the film editing machine 1. In accordance with the operation signal, the film editing machine 1 operates in the forward direction or in the reverse direction, and outputs the bi-phase pulses. The first synchronizer counts the bi-phase pulses to read the current time position. When the current time position thus read is equal to the time position set before, the first synchronizer applies the stop signal to the film editing machine.

As is apparent from the above description, the operator can reach a desired part of the film merely by operating the synchronizer controller 15. Furthermore, the modification eliminates the operation wherein the operator writes a time position in the synchronizer controller 15 while watching the counter of the film editing machine 1.

Furthermore, according to this invention, the film editing operation can be achieved only with the video projection system. In this case, the output of the video camera 3 is further connected to a video tape recorder (not shown), and the operator carries out a film editing operation while watching the image projected onto the screen 8 by the video projector 7 or the image displayed on the screen of the video monitor 9 connected to the output of the video camera 3, and the images thus edited are recorded as video images with the video tape recorder. The utilization of the system in this manner is applicable to a wide range of film editing methods such as a film editing method in which desired frames of a plurality of motion picture films are selected and subjected to comparison. In addition, motion picture films may be edited into video films for video libraries.

As is apparent from the above description, the system according to the invention has the following significant advantages:

(1) Heretofore, in order to project a motion picture film on the screen, it has been necessary to use a projector; and in order to form video images, it has been necessary to use an expensive tele-cine device to record the pictures in the frames of a motion picture film in a video tape. On the other hand, in the system according to the present invention, the film editing machine, the video camera and the video projector are suitably combined, so that desired ones of the pictures in the frames of a film can be projected on the screen quickly.

(2) Heretofore, it has been impossible to change and quickly project desired ones of the pictures in the frames of a motion picture film, because of the use of a projector. On the other hand, with the system according to the present invention, such desired pictures can be changed and projected quickly, and they can be projected one at a time. Accordingly, even if, during a sound recording operation carried out for an animation TV motion picture by radio actors or actresses, one of them makes a mistake in speaking his part, the film can be easily rewound to the start position (i.e., the start picture position and sound record position) so that the sound recording operation may be carried out again. The sound recording operation by radio actors or actresses can also be readily achieved.

(3) Heretofore, in the projection of a motion picture on the screen, the projector must be operated by a qualified projectionist. However, according to the present invention, it is unnecessary to use a qualified projectionist, which means that the cost for projection of a motion picture film is correspondingly reduced.

(4) According to the present invention, it is unnecessary to provide a large space for use of a projector.

(5) Heretofore, a projector must be operated by a projectionist. On the other hand, according to the invention, remote control can be employed for projection of a motion picture film, i.e., the projector can be freely operated from a distance.

(6) According to the invention, there is no problem with generation of heat and noise by the projector.

(7) The conventional method of using the film editing machine can be more effectively employed according to the invention.

## Claims

1. A video projection method for a projection film having a plurality of pictures in respective frames, comprising:

irradiating a projection film, e.g., a broadcasting film or a motion picture film, with a light source in a film editing machine while adjusting the intensity of said light source;

shooting the pictures in the frames of said film with a video camera coupled to said film editing machine; and

displaying said pictures in response to an output of said camera.

2. The method according to claim 1, wherein said displaying step comprises displaying said pictures on a video monitor.

3. The method according to claim 1, wherein said displaying step comprises projecting said pictures onto a screen.

4. The method according to claim 1, further comprising the step of passing a light beam passing through said film from said light source through a color changing filter for changing the color of said light beam.

6. The method according to claim 1, further comprising the steps of editing said film while watching displayed pictures, while recording images edited through said editing operation as video images on a video tape recorder coupled to an output of said camera. 7. A film processing system, comprising:

a film editing machine including means for adjusting an intensity of light applied to a projection film, e.g., a broadcasting film or a motion picture film;

a video camera coupled to said film editing machine, for converting the pictures in the frames of said film into video signals;

display means responsive to said video signals outputted by said video camera for displaying images of said pictures;

**8.** A system according to claim 7, wherein said film editing machine further comprises a color changing filter for changing the color of a light beam passed through said film.

**9.** A system according to claim 7, further comprising:

an audio tape recorder coupled to said film editing machine for recording sounds corresponding to said pictures in the frames of said film;

a mechanism for synchronizing said film editing machine and said audio tape recorder with each other; and

remote control means for remotely operating said film editing machine and said audio tape recorder.

**10.** A system according to claim 7, wherein said display means comprises a video projector for converting said video signals outputted by said video camera into video images and projecting said video images on a screen.

**11.** A system according to claim 7, wherein said display means comprises a video monitor for converting said video signals outputted by said video camera into video images and displaying said video signal thereon.

**12.** A system according to claim 9, wherein said film editing machine includes means for providing bi-phase pulses having a predetermined frequency and having a phase which indicates a forward operation or reverse operation of said film editing machine, and wherein said mechanism for synchronizing said film editing machine and said audio tape recorder comprises:

an interface box which (1) generates a line lock pulse, (2) determines, in response to said bi-phase pulses from said film editing machine, whether said film editing machine is operating in a forward or reverse mode, and (3) counts said bi-phase pulses, and generates a start pulse when the number of bi-phase pulses thus counted reaches a predetermined value;

a first synchronizer which receives said line lock pulse and said start pulse and starts formation of a first time code in response to said start pulse, and supplies said first time code thus formed to a second synchronizer;

said second synchronizer which receives said line lock pulse, said first time code and a second time code which has been recorded in a sound recording tape in said audio tape recorder, and controls the rotation of said audio tape recorder in accordance with a difference between said former and latter time codes; and

a synchronizer controller which has a numerical keyboard for setting operation start positions for said film editing machine and said audio tape recorder, and applies data on said operation start positions to said first synchronizer.

**13.** A system according to claim 12, wherein said first synchronizer includes:

means for counting said bi-phase pulses provided by said film editing machine and recording a first time position in correspondence to the number of bi-phase pulses thus counted; and

means for applying an operation signal to said film editing machine when a time position set by said synchronizer controller is different from said first time position, and for applying a stop signal to said film editing machine when said time position set by said synchronizer controller is equal to said first time position.

# FIG. 1

# FIG. 2

EP 0 481 446 A2